# EUROPEAN PATENT APPLICATION

(11) **EP 4 006 814 A1**
(43) Date of publication of application: **01.06.2022**
(21) Application number: 20847809.9
(22) Date of filing: 31.07.2020
(51) Int. Cl.: G06Q 40/02, G06Q 20/06, G06Q 20/10, G06Q 20/36

(54) **REMITTANCE RELAY METHOD USING CRYPTOCURRENCY AND DEVICE USING SAME**

(30) Priority: 31.07.2019 KR 20190093373
(71) Applicant: Chain Partners Inc., Seoul 04059 (KR)
(72) Inventor: PYO, Chul Min, Seoul 07344 (KR)
(74) Representative: Fabry, Bernd
(86) International application number: PCT/KR2020/010152
(87) International publication number: WO 2021/020938

(57) **Abstract**

A remittance relay method according to an embodiment of the present invention is provided. The method comprises the steps of: receiving a request for remittance from a remitter device to a recipient account; and on the basis of the received request for remittance, transmitting matching information including transaction information associated with a cryptocurrency to be used for remittance among a remitter, at least two participant devices, and a recipient, to the remitter device and at least two participant devices, wherein the participant devices include a first participant device and a second participant device, a transaction between a remitter and a first participant is made in a first currency, and a transaction between a second participant and a recipient is made in a second currency different from the first currency.

## Description

### FIELD

The present disclosure relates to a method for transfer mediation using cryptocurrency and an apparatus using the same, and more particularly, a method for transfer mediation that can conduct a transaction between different currencies using cryptocurrency and an apparatus using the same.

### BACKGROUND

There are various ways to mediate between different currencies using a cryptocurrency.

Basically, a method (Korean Patent No. 10-1628624) that a transaction broker receives remittance in a first currency from a remitter to exchange the first currency into a certain cryptocurrency at a first exchange, electronically transmits the exchanged certain cryptocurrency, and exchanges the transmitted certain cryptocurrency again into a second currency at a second exchange may be used. In addition, a method (Korean Patent Application Publication No. 10-2017-0073336 and Korean Patent Application Publication No. 10-2018-0004049) that a transaction broker collects remittance requests for each country, and exchanges them into a cryptocurrency through a cryptocurrency exchange only as much as the amount of money that is finally required to be transferred between countries to electronically transmit may be used.

However, a transaction broker directly receives remittance from a remitter and uses a cryptocurrency exchange in such methods, accordingly, various problems may occur. For example, the transaction broker directly faces a loss due to a difference in purchase price and selling price of the cryptocurrency. In addition, the transaction broker directly burdens exchange fee or takes risks from hacking of a cryptocurrency exchange. As a result, the transaction broker as a single entity unilaterally burdens such losses and risks.

### DETAILED DESCRIPTION OF THE INVENTION

### TECHNICAL PROBLEM

An object to be achieved by the present disclosure is to provide a method for transfer mediation that the transaction broker does not directly receive remittance nor uses a cryptocurrency exchange, and an apparatus using the same.

### SOLUTION

According to an aspect of the present disclosure, a method for transfer mediation is provided. The method includes receiving a transfer request from a remitter device to a remittee account; and transmitting matching information to the remitter device and at least two or more participant devices, the matching information including transaction information associated with a cryptocurrency to be used for transfer among a remitter, the at least two or more participant devices, and a remittee based on the received transfer request, in which the participant devices include a first participant device and a second participant device, and a transaction between the remitter and the first participant is made with a first currency and a transaction between the second participant and the remittee is made with a second currency that is different from the first currency.

According to another aspect of the present disclosure, the method may further include transmitting a first transaction instruction to the second participant device, to instruct the second participant device to exchange the cryptocurrency to be used for transfer into the second currency, based on the matching information, and transmitting a second transaction instruction to the first participant device, to instruct the first participant device to exchange the first currency into the cryptocurrency to be used for transfer.

According to yet another aspect of the present disclosure, the method may further include transmitting the first transaction instruction to the second participant device, in a case where a first transaction preparation response is received from the first participant device within a predetermined time, the first transaction preparation response of which the first participant device will transfer remittance in the cryptocurrency to be used for transfer to the second participant device, and transmitting the second transaction instruction to the first participant device, in a case where a second transaction preparation response is received from the remitter device within a predetermined time, the second transaction preparation response of which the remitter will transfer remittance in the first currency to the first participant device.

According to another aspect of the present disclosure, the second transaction instruction may not be transmitted in a case where the first transaction preparation response is not transmitted from the first participant device.

According to another aspect of the present disclosure, the first transaction instruction may be transmitted to the second participant device to verify whether the first participant device transmitted the first transaction preparation response, and the second transaction instruction may be transmitted to the first participant device to verify whether the remitter device transmitted the second transaction preparation response.

According to another aspect of the present disclosure, the method may further include determining the at least two or more participant devices and the cryptocurrency to be used for transfer in response to the transfer request, based on at least one or more of a pre-registered transaction intention of the participants, pre-stored information of the participants, and cryptocurrency transaction information.

According to another aspect of the present disclosure, the pre-stored information of the participants includes the electronic wallet addresses of the participants, and the cryptocurrency transaction information may include at least any one of the transaction data between at least one of the first currency and the second currency obtained from an API of a cryptocurrency exchange and the cryptocurrency, and the transaction data using the cryptocurrency on the blockchain-based payment platform.

According to another aspect of the present disclosure, the cryptocurrency may be determined by a preferential consideration of cryptocurrency transaction information associated with the second currency, the pre-registered transaction intention associated with the second currency, and types and an amount of the cryptocurrency held by the participants obtained from the electronic wallet addresses of the participants.

According to another aspect of the present disclosure, after determining the cryptocurrency to be used for transfer, the first participant device may be determined as a device of a participant who has the pre-registered transaction intention associated with the first currency and holds the cryptocurrency, and the second participant device may be determined as a device of a participant who has the pre-registered transaction intention associated with the second currency and holds the cryptocurrency.

According to another aspect of the present disclosure, the number of types of the cryptocurrency to be used for transfer may be determined by two or more and the number of the participant devices may be determined by three or more.

According to another aspect of the present disclosure, at least any one of the first transaction instruction and the second transaction instruction may be a cryptocurrency exchange instruction for making transfer by dividing the remittance by participatable amounts of participants.

According to another aspect of the present disclosure, the amount of the remittance in the first currency to be used for transfer may be determined for the at least two or more participants, the amount thereof may be divided by participatable amounts of the at least two or more participants.

According to another aspect of the present disclosure, the participatable amount may be determined based on at least one or more of types and an amount of the cryptocurrency held by the participants, a past transaction history of the cryptocurrency, and an evaluation for previously made transactions of the participants.

According to another aspect of the present disclosure, the method may further include verifying completion of the transaction among the remitter, the first participant, the second participant, and the remittee.

According to another aspect of the present disclosure, the verifying completion of the transaction may be performed by using at least any one of an electronic wallet address and a remittance slip.

According to another aspect of the present disclosure, transmission of the cryptocurrency to be used for transfer between the first participant and the second participant may be verified by using an electronic wallet address of the first participant or the second participant, and transfer of the second currency from the second participant to the remitter may be verified by using a remittance slip received from the second participant, and transfer of the first currency from the remitter to the first participant is verified by using a remittance slip received from the remitter.

According to another aspect of the present disclosure, the first transaction instruction may be transmitted to the second participant device to verify whether the first participant transmitted the cryptocurrency to be used for transfer to the second participant, and the second transaction instruction may be transmitted to the first participant device to verify whether the remitter transmitted the first currency to the first participant.

According to another aspect of the present disclosure, verification content of completed transaction between the remitter, the first participant, the second participant, and the remittee may be stored in an evaluation for transactions of the participants.

According to another aspect of the present disclosure, a transfer mediation apparatus is provided. The transfer mediation apparatus includes a communication unit, in which the communication unit is configured to communicate with a physically separated device, the communication unit receives a transfer request from a remitter device to a remittee account, and transmits a cryptocurrency exchange instruction to the remitter device and at least two or more participant devices, the cryptocurrency exchange instruction including transaction information associated with a cryptocurrency to be used for transfer among a remitter, the at least two or more participants, and a remittee, based on the received transfer request, and the participant devices include a first participant device and a second participant device, and a transaction between the remitter and the first participant is made with a first currency and a transaction between the second participant and the remittee is made with a second currency that is different from the first currency.

Hereinafter, the present disclosure will be described in detail by following exemplary embodiments. However, the scope of the present disclosure is not to be interpreted as limited to these exemplary embodiments because the exemplary embodiments are merely for an illustrative explanation.

### EFFECT OF THE INVENTION

According to the present disclosure, losses and risks that are burdens on a transaction broker as a single entity maybe eliminated or lightened by a method for transfer mediation using cryptocurrency and an apparatus using the same in the present disclosure.

### BRIEF DESCRIPTION OF THE DRAWINGS

FIG. 1 is a schematic diagram of a system including a transfer mediation apparatus according to an exemplary embodiment of the present disclosure;
FIG. 2 is a schematic block diagram for explaining a transfer mediation apparatus according to an exemplary embodiment of the present disclosure;
FIG. 3 is a schematic flowchart for explaining a method for transfer mediation according to an exemplary embodiment of the present disclosure;
FIG. 4 is a schematic flowchart for explaining a method for transfer mediation according to another exemplary embodiment of the present disclosure; and
FIG. 5 is a schematic flowchart for explaining a method for transfer mediation according to an exemplary embodiment of the present disclosure.

### MOST PREFERRED EMBODIMENT TO PRACTICE THE INVENTION

The advantages and features, and the methods for accomplishing thereof will be apparent in reference with exemplary embodiments described below in detail together with accompanying drawings. However, the present disclosure is not limited to the exemplary embodiments described below but will be implemented in various different forms. The exemplary embodiments are provided only to complete the present disclosure and to fully convey the concept of the disclosure to those skilled in the art, and the present disclosure will only be defined by the appended claims.

Although the first, the second, and the like are used to describe various elements, these elements are not limited by these terms. The above-described terms are used only to distinguish one component from the other. Thus, a first element to be mentioned below may be a second element within the scope of the present disclosure.

Same reference numerals refer to same elements throughout the specification.

Each feature of the various exemplary embodiments of the present disclosure maybe partially or entirely coupled or combined, variously interlocked and driven in technical manner as those skilled in the art may fully understand, and each of the exemplary embodiments maybe performed independently with respect to each other or carried together in association.

In the present specification, an apparatus or a device according to an exemplary embodiment of the present disclosure is not limited, a general-purpose computer, a laptop, a network-attached storage, a streaming server, a mobile device such as an MP3 player, a tablet device, and a smartphone, and the like may be included thereto. Hereinafter, various exemplary embodiments of the present disclosure will be described in detail with reference to the accompanying drawings.

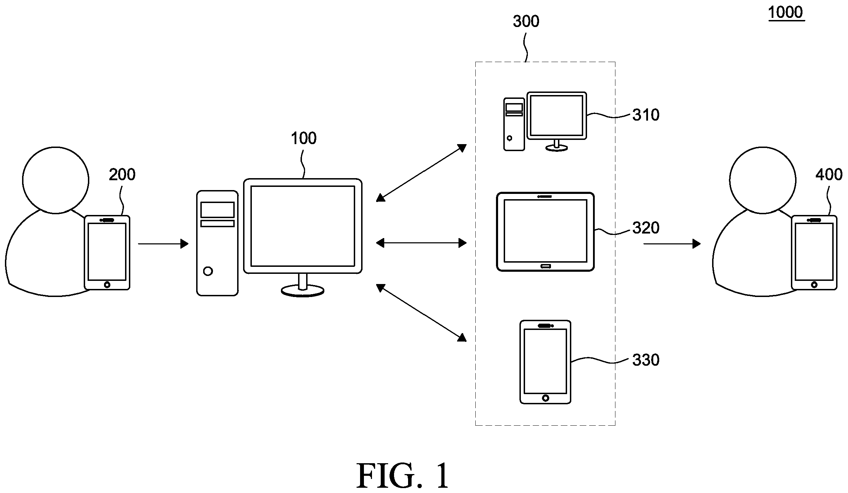

FIG. 1 is a schematic diagram of a system including a transfer mediation apparatus according to an exemplary embodiment of the present disclosure. Referring to FIG. 1, a system 1000 includes a transfer mediation apparatus 100, a remitter device 200, a participant device 300, and a remittee device 400.The transfer mediation apparatus 100 receives a transfer request, from the remitter device 200, to transfer a remittance in a first currency to the remittee device 400 in a second currency, and mediates the transfer using at least two or more of the participant devices 300 based on the received transfer request. In order to mediate the transfer, the transfer mediation apparatus 100 transmits matching information including a cryptocurrency to be used for transfer and transaction information associated with the cryptocurrency to the remitter device 200 and the participant device 300. A transaction between the remitter and the first participant is made in the first currency, a transaction between the first participant and the second participant is made in the cryptocurrency to be used for transfer, and a transaction between the second participant and the remittee is made in the second currency, based on the matching information. In the present disclosure, a remitter, a participant, and a remittee may be described as a remitter device 200, a participant device 300, and a remittee device 400 for convenience. In this case, each device may be understood to refer to entities using the corresponding devices.

In the present specification, the transfer mediation apparatus 100 is an apparatus including a processor for processing a request, information, an instruction, a response, and the like associated with transfer without limitation. The apparatus may include a server, a terminal, a platform device, and the like.

In the present specification, the remitter device 200, the participant device 300, and the remittee device 400 may include any device capable of transmitting and receiving a request, information, an instruction, a response, and the like associated with transfer without limitation. For example, the device may include a general-purpose computer, a laptop, a network-attached storage, a streaming server, a mobile device such as an MP3 player, a tablet device, and a smartphone, and the like.

In such a transfer method of which the transfer mediation apparatus 100 uses at least two or more participant devices 300, the transfer mediation apparatus 100 which is a transaction broker does not directly receive remittance from the remitter device 200 nor uses a cryptocurrency exchange. Thus, losses and risks that are burdens on the transfer mediation apparatus 100 which is a transaction broker as a single entity maybe eliminated or lightened.

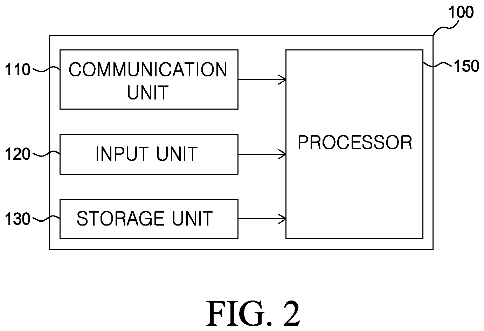

FIG. 2 is a schematic block diagram for explaining a transfer mediation apparatus according to an exemplary embodiment of the present disclosure. Referring to FIG. 2, the transfer mediation apparatus 100 includes a communication unit 110, an input unit 120, a storage unit 130, and a processor 150.

The communication unit 110 may receive a transfer request from the remitter device 200, transmit matching information or transaction instructions to the remitter device 200 or the participant devices 300, and receive the transaction preparation response from the remitter device 200 or the participant devices 300. Furthermore, the communication unit 110 may receive participant information including a transaction intention associated with a cryptocurrency or legal tender, electronic wallet addresses of the participants, and the like. Cryptocurrency information of participants including types and an amount of cryptocurrency held by the participants and a past transaction history of the cryptocurrency may be received through blockchain platforms such as Bitcoin Block Explorer, and Etherscan, using the received electronic wallet addresses of the participants. Furthermore, the communication unit 110 may receive cryptocurrency transaction information, for example, transaction data between a certain cryptocurrency and legal tender from an application programming interface(API) of a cryptocurrency exchange, transaction data between a legal tender (a first currency or a second currency) and a cryptocurrency collected on-line or off-line, transaction data of using the cryptocurrency on a blockchain-based payment platform, and the like. And the communication unit 110 may receive a remittance slip from the remitter device 200 or the participant devices 300.In various exemplary embodiments, the communication unit 110 is not limited, includes a wireless communication unit (for example, a cellular communication unit, a short-range wireless communication unit, a global navigation satellite system (GNSS) communication unit, or the like) or a wired communication unit (for example, a local area network (LAN) communication unit, a power line communication unit, or the like), and may communicate with external devices through a short-range communication network (for example, Bluetooth, WiFi direct, infrared data association (IrDA), or the like) or a long-range communication network (for example, a long-range communication network such as a cellular network, an internet, or a computer network (e.g. LAN or WAN)) using the corresponding communication unit.

The input unit 120 may provide input for storing participant information including a transfer request, matching information, a transaction instruction, a transaction preparation response, a transaction intention, electronic wallet addresses of the participants, and the like, cryptocurrency information of the participants, transaction data received from an API of a cryptocurrency exchange, a remittance slip, and the like.

The storage unit 130 may store the data provided by the input unit 120.In various exemplary embodiments, the storage unit 130 is not limited, may include at least one storage medium of a flash memory type memory, a hard disk type memory, a multimedia card micro type memory, a card type memory (for example, SD or XD memory), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk.

The processor 150 performs overall operation of the transfer mediation, and is operatively connected to the communication unit 110, the input unit 120, and the storage unit 130.The processor 150 may determine at least two or more participant devices (for example, a first participant device and a second participant device) to be included in matching information and transaction information associated with a cryptocurrency to be used for transfer, based on a transfer request. The processor 150 may determine to transmit a first transaction instruction of instructing the second participant device to exchange the cryptocurrency to be used for transfer into the second currency and transmit a second transaction instruction of instructing the first participant device to exchange the first currency into the cryptocurrency to be used for transfer, based on the matching information.

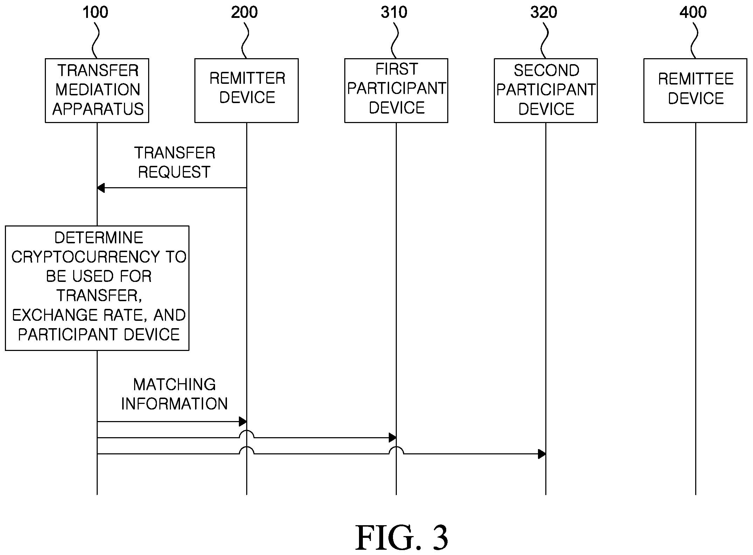

FIG. 3 is a schematic flowchart for explaining a method for transfer mediation according to an exemplary embodiment of the present disclosure.

First, a transfer request from the remitter device 200 to the remittee device 400 is received in the transfer mediationapparatus100. The transfer request may a request for transfer the remittance to an account of the remittee or deliver the remittance directly to the remittee. The transfer request may a request for transfer a first currency which is a legal tender to the remittee as a second currency which is a legal tender different from the first currency.

The transfer mediation apparatus 100 may transmit the matching information including transaction information associated with a cryptocurrency to be used for transfer among a remitter, the at least two or more participants, and a remittee to the remitter device 200 and the participant device 300, based on the transfer request. The participant device 300 may include a first participant device 310 and a second participant device 320, the first participant device 310 and the second participant device 320 may be understood to refer to a first participant and a second participant who are entities using the devices. In the basis of the transfer request, the first participant may be a party that holds or will hold a certain cryptocurrency (cryptocurrency to be used for transfer) and plans to exchange the cryptocurrency into a first currency held by a remitter, and the second participant may be a party that holds or will hold a second currency and plans to exchange the second currency into the certain cryptocurrency held by the first participant. The first participant must hold the certain cryptocurrency possessed at least a time point when the first participant is trying to exchange the certain cryptocurrency with the remitter, and the second participant must hold the second currency possessed at least a time point when the second participant is trying to exchange the second currency with the first participant. The first participant and the second participant are not limited to have the same nationality or to have an address or residence in the same country. Meanwhile, in the present specification, the participant or the participant device may be a user of a service providing a transfer mediation apparatus or a method for transfer mediation described in the present specification.

Transaction information associated with the cryptocurrency to be used for transfer of the matching information may include a type of cryptocurrency to be used for the transfer and an exchange rate between the legal tender (the first currency and the second currency) and the cryptocurrency to be used for transfer. Based on an agreement among the remitter device 200, the first participant device 310, and the second participant device 320 to the transaction according to the received matching information, a transaction between the remitter device 200 and the first participant device 310 is made in the first currency, a transaction between the second participant device 320 and the remittee device 400 is made in the second currency which is a legal tender different from the first currency. As a result, the remittance in the first currency by the mediation of the transfer mediation apparatus 100 may be transferred by exchanging the first currency into the second currency, using the cryptocurrency to be used for transfer, to the remittee device 400.For example, in a case where a remitter transfers 300,000 KRW as Korean legal tender to a remittee in VND as Vietnamese legal tender, using Ethereum (ETH) as a cryptocurrency, matching information of sequentially exchanging 300,000 KRW into 1 ETH and 1 ETH into 5.9 million VND may be included. How specifically a type (Ethereum) of the cryptocurrency to be used for transfer and an exchange rate (300,000 KRW/1 ETH and 1 ETH/5.9 million VND) between the cryptocurrency and the legal tender included in the matching information are determined will be described later.

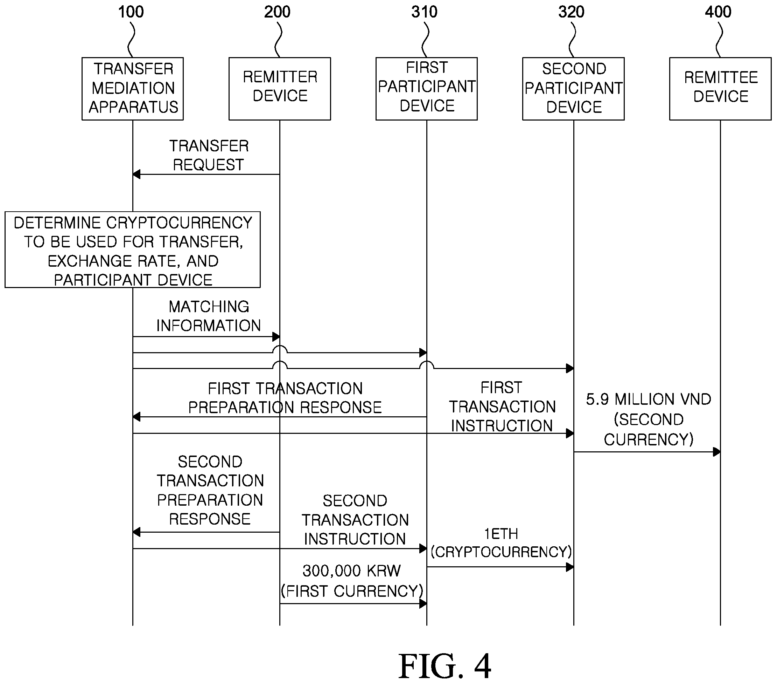

In relation to the matching information, the remitter device 200, the first participant device 310, and the second participant device 320 received the matching information receive the matching information from the transfer mediation apparatus 100 in various ways such as notifications of mobile device, or an e-mail, and may agree, reject, or may not respond to the transaction according to the matching information. The agreement to the transaction based on the matching information may be confirmed by transmitting the agreement in various ways such as the receiving of the matching information, or instead, by transmitting a transaction preparation response within a predetermined time. The transaction preparation response will be described later, in relation to FIG. 4.

A type of the cryptocurrency to be used for transfer and an exchange rate between the legal tender and the cryptocurrency to be used for transfer included in the matching information are determined by the transfer mediation apparatus 100 in accordance with a transfer request, based on at least one or more of a pre-registered transaction intention of the participants, pre-stored information of the participants, and cryptocurrency transaction information. In one exemplary embodiment, a cryptocurrency to be used for transfer may be determined based on cryptocurrency transaction information associated with the second currency, a pre-registered transaction intention associated with the second currency, and types and an amount of the cryptocurrency held by the participants obtained from the electronic wallet addresses of the participants, for example, by a preferential consideration of at least any one of a cryptocurrency which has more transaction amount or more payment request with the second currency at a cryptocurrency exchange or on a blockchain-based payment platform in a second country of which a legal tender is the second currency, a cryptocurrency which the participants are more willing to exchange into the second currency, and a cryptocurrency held more by the participants.

In one exemplary embodiment, the exchange rate between the cryptocurrency and legal tender included in the matching information may be determined before the cryptocurrency and participant devices to be used for transfer are determined, according to the pre-registered transaction intention of the remitter and the participants. In this case, in the exchange rate between the cryptocurrency and legal tender, the matching information may be determined as a condition dependent on the pre-registered transaction intention of the remitter and the participants. However, a situation that a determination of matching information is relatively delayed, or available matching information cannot be found in accordance with market conditions may occur. In addition, the exchange rate between the cryptocurrency and legal tender included in the matching information may be determined, based on at least any one of pre-stored information of the participants and cryptocurrency transaction information, after the cryptocurrency and participant devices to be used for transfer are determined, based on the cryptocurrency transaction information. In this case, a determination of matching information is relatively fast in accordance with market conditions, however, a situation that the remitter and some of the participants may have relatively unfavorable conditions in the exchange rate between the cryptocurrency and legal tender may occur. The exchange rate between the cryptocurrency and legal tender may include a predetermined commission or a reward for the participants.

Hereinafter, a pre-registered transaction intention of the participants, pre-stored information of the participants, and cryptocurrency transaction information are described in detail, and a described content thereof is commonly applied in determining a type of the cryptocurrency to be used for transfer and an exchange rate between the legal tender and the cryptocurrency to be used for transfer included in the matching information and in determining participant devices.

The pre-registered transaction intention of the participants refers to a transaction intention for exchanging a certain cryptocurrency into a certain legal tender or a certain legal tender into a certain cryptocurrency, and may include at least any one of an exchange rate of a certain cryptocurrency and a certain legal currency, for example, BTC (Bitcoin)/KRW rate, and a transaction participation amount.

The pre-stored information of the participants may include electronic wallet addresses of the participants and an evaluation for previously made transactions of the participants. The transfer mediation apparatus 100 may obtain types and balance of cryptocurrency held in the corresponding electronic wallet addresses of the participants, transaction history including electronic wallet addresses of transaction counterpart and transaction amounts in previously made transactions through blockchain platforms such as Bitcoin Block Explorer, and Etherscan, using the electronic wallet addresses of the participants. The evaluation for previously made transactions of the participants may include at least one or more of participation amounts of the previously made transactions, types of cryptocurrency and legal tender used in the previously made transactions, transaction time, and a verification history. In particular, the transfer mediation apparatus 100 may obtain types and balance of cryptocurrency held in the corresponding electronic wallet addresses, and previously made transaction history in a real time, regardless of whether the participants agree or not, through electronic wallet addresses of the participants and blockchain platforms. Thus, a cryptocurrency to be used for transfer and an exchange rate between a cryptocurrency and a legal tender included in the matching information may be determined more accurately and quickly using the electronic wallet addresses of the participants.

The cryptocurrency transaction information may include transaction data between a cryptocurrency and a legal tender obtained from an API of a cryptocurrency exchange. The transaction data may include all data provided from the cryptocurrency exchange such as current price, volume, and fluctuation rate. The cryptocurrency exchange may be a cryptocurrency exchange of a first country of which a legal tender is a first currency, a cryptocurrency exchange of a second country of which a legal tender is a second currency, or a cryptocurrency exchange of a third country which is not the first country nor the second country. However, the cryptocurrency exchange in the present disclosure includes data related to at least any one of a transaction between a first currency and a certain cryptocurrency and a transaction between a second currency and a certain cryptocurrency, based on the transfer request. In addition, the cryptocurrency transaction information may be transaction data between a legal tender (a first currency or a second currency) and a cryptocurrency collected on-line or off-line. In addition, the transaction data may be data obtained automatically or manually as a demand for a transaction between a legal tender and a cryptocurrency, which does not use a cryptocurrency exchange. For example, the transaction data may be data obtained automatically from an API of a community for Korean in a second country or collected manually through a handwriting input, as a demand for a transaction between a cryptocurrency and a first currency or a second currency requested in the community.

In addition, the cryptocurrency transaction information may include transaction data of using a cryptocurrency on a blockchain-based payment platform. For example, in a case where a payment request for paying 300,000 KRW of hospital charge charged at the hospital with 1 ETH held by a service user (before determined as a first participant device 310) is occurred in a certain blockchain-based payment platform and the transfer mediation apparatus 100 received the request, the transfer mediation apparatus 100 may use the payment request to determine a type of a cryptocurrency or a participant device, based on the pre-received transfer request. In this case, a remitter device 200 determines the service user as a first participant device 310, transfers 300,000 KRW (corresponding to a part or whole of remittance) to the hospital as a third party which is designated by the first participant device 310, and the first participant device 310 transfers 1 ETH to a second participant device 320 in return. Thus, a first participant device 310 may participate in transfer in such a manner. The service user may be a user of a service providing a transfer mediation apparatus or a method for transfer mediation described in the present specification, but is not limited thereto, or may be a user of another blockchain-based payment platform which made an agreement to use a transfer mediation apparatus or a method for transfer mediation described in the present specification and transaction data using a cryptocurrency with each other. Transaction data using a cryptocurrency on a blockchain-based payment platform is not limited to a payment request occurred in a general payment application, and may include payment or transaction requests capable of using a cryptocurrency at the other applications on Android and iOS and decentralized applications (DApp) that are not payment applications or payment or transaction requests generated as a condition on a smart contract. By using transaction data using a cryptocurrency on a blockchain-based payment platform as cryptocurrency transaction information, the transfer mediation apparatus 100 may more quickly determine a cryptocurrency to be used for transfer or participant devices, therefore a transfer mediation by the transfer mediation apparatus 100 may be made more quickly.

After the cryptocurrency to be used for transfer and an exchange rate between the legal tender and the cryptocurrency to be used for transfer included in the matching information are determined, the first participant device 310 and the second participant device 320 may be determined. In FIG. 3, although a case where the number of participant devices is two is illustrated, the number of participant devices may be three or more. In one exemplary embodiment, the first participant device 310 may be determined to a participant device which has pre-registered transaction intention associated with the first currency and holds the determined cryptocurrency, the second participant device 320 may be determined to a participant device which has pre-registered transaction intention associated with the second currency and holds the determined cryptocurrency. In determining the first participant device, whether the device holds the determined cryptocurrency is determined by types and balance of cryptocurrency held in the electronic wallet addresses of pre-stored participants obtained through the electronic wallet addresses thereof.

FIG. 4 is a schematic flowchart for explaining a method for transfer mediation according to another exemplary embodiment of the present disclosure. A process that a transfer request is received by the transfer mediation apparatus 100, the transfer mediation apparatus 100 transfers matching information determined based on the received transfer request to the remitter device 200, the first participant device 310, and the second participant device 320, and the transfer is made from the remitter device 200 to the remittee device 400 according to the transferred matching information may be understood as described above with respect to FIG. 3.In the exemplary embodiment of FIG. 4, a method of transfer mediation that the transfer is made by a transaction instruction according to a transaction preparation response is described, by further including the transaction preparation response and the transaction instruction transmitted and received among the transfer mediation apparatus 100, the remitter device 200, the first participant device 310, and the second participant device 320, after the matching information is transmitted by the transfer mediation apparatus 100.

The transfer mediation apparatus 100 may receive responses of the remitter device 200, the first participant device 310, and the second participant device 320 that transaction based on the matching information is agreed, within a predetermined time, or transaction preparation responses of the remitter device 200 or the first participant device 310 that the transaction will be carried out within a predetermined time. For example, the transfer mediation apparatus 100 may receive a first transaction preparation response from the first participant device 310 that the first participant device 310 will transfer a cryptocurrency to be used for transfer equivalent to the remittance to the second participant device 320 within a predetermined time, and a second transaction preparation response from the remitter device 200 that the remitter device 200 will transfer a first currency equivalent to the remittance to the first participant device 310 within a predetermined time.

In a case where the transfer mediation apparatus 100 receives a transaction preparation response, the transfer mediation apparatus 100 may transmit a transaction instruction to make transaction based on the matching information to at least any one of the first participant device 310 and the second participant device 320.More specifically, in a case where the transfer mediation apparatus 100 receives a first transaction preparation response, the transfer mediation apparatus 100 may transmit a first transaction instruction to exchange the cryptocurrency to be used for transfer into the second currency in an exchange rate according to the matching information, to the second participant device 320, and in a case where the transfer mediation apparatus 100 receives a second transaction preparation response, the transfer mediation apparatus 100 may transmit a second transaction instruction to exchange the first currency into the cryptocurrency to be used for transfer, to the first participant device 310.

Furthermore, in a case where the transfer mediation apparatus 100 transmits the first transaction instruction to the second participant device 320, the transfer mediation apparatus 100 may transmit the instruction to make the second participant device 320 verify whether the first participant device 310 transmitted the first transaction preparation response, and in a case where the transfer mediation apparatus 100 transmits the second transaction instruction to the first participant device 310, the transfer mediation apparatus 100 may transmit the instruction to make the first participant device 310 verify whether the remitter device 200 transmitted the second transaction preparation response. Thus, the transfer mediation apparatus 100 verifies at least any one of transaction intentions of the remitter device 200 and the first participant device 310 through the transaction preparation responses, transmits a transaction instruction corresponding to the verified transaction intention to at least any one of the first participant device 310 and the second participant device 320, thus to make participants recognize higher reliability and stability, thereby high transaction stability maybe secured.

Further, in a case where the transfer mediation apparatus 100 does not receive the first transaction preparation from the first participant device 310, the transfer mediation apparatus 100 does not transmit the second transaction instruction to the first participant device 310, thereby a transaction stability may be more highly secured. In transferring a first currency to the remittee in a second currency using a cryptocurrency, since an end purpose is that the remittee device 400 is of receiving the second currency equivalent to the remittance, it is most important that the remittee stably receives the remittance in the second currency. However, in a method for transfer mediation that the transfer mediation apparatus 100 (that is, a transaction broker) does not directly receive remittance nor uses a cryptocurrency exchange, such as illustrated in FIG. 4, reliability and stability in making transaction among the remitter, participants, and remittee may be a problem, contrary to an escrow method, which is a method that a transaction broker as a third party receives payment for goods and transfers the deposit once delivery of the goods is verified, may have a problem in reliability and stability with the transaction broker as a third party.

In order to solve the above problem, in the escrow method, reliability and stability of making the transaction may be more highly secured by determining a transaction broker as a third party with a one who has high reliability and stability. In contrast, in the present application, the transfer mediation apparatus 100, such as in FIG. 4, (1) receives the transaction preparation response and transmits the transaction instruction corresponding to the transaction preparation response to primarily secure a transaction stability, (2) further, considering the end purpose of transferring to the remittee device 400, does not transmit the second transaction instruction in a case where the first transaction preparation response that makes transfer the second currency equivalent to the remittance, by exchanging the cryptocurrency to be used for transfer into the second currency, to the remittee device 400 is not received, and induces the preferential transfer from the second participant device 320 to the remittee device 400, to secure a higher transaction stability in terms of the end purpose. Under the more highly secured transaction stability in terms of the end purpose, by making preferential transfer to the remittee device 400, a transaction between the first participant device 310 and the second participant device 320 or a transaction between the remitter device 200 and the first participant device 310 may be made. Accordingly, specifically in the transaction between the remitter device 200 and the first participant device 310, the transfer of first currency equivalent to the remittance from the remitter device 200 to the first participant device 310 may be made more quickly because the end purpose of the remitter is achieved. When the transfer of the second currency equivalent to the remittance from the second participant to the remittee, the transmission of the cryptocurrency to be used for transfer equivalent to the remittance from the first participant to the second participant, and the transfer of the first currency equivalent to the remittance from the remitter to the first participant are all made, the transfer mediation by the transfer mediation apparatus 100 is completed.

According to another aspect of the present disclosure, the method for transfer mediation may include verifying completion of the transaction. More specifically, the completion of the transaction between the remitter and the first participant, the transaction between the first participant and the second participant, the transaction between the second participant and the remittee is verified by the transfer mediation apparatus 100, thus reliability and stability of making the transaction are secured, and a verification result thereof is transmitted to the remitter device 200 or the first participant device 310 through the transfer mediation apparatus 100, the faster first transaction preparation response or second transaction preparation response may be induced, thereby the transaction may be made more quickly.

The completion of the transaction among the remitter, the first participant, the second participant, and the remittee may be verified by using at least any one of an electronic wallet address and a remittance slip. For example, the transfer mediation apparatus 100 obtains transaction history of the cryptocurrency through a blockchain platform using at least any one of the electronic wallet addresses of the first participant and the second participant. And the transfer mediation apparatus 100 may verify at least any one of the fact that the first participant transferred the cryptocurrency to be used for transfer equivalent to the remittance to the second participant and the fact that the second participant received the cryptocurrency to be used for transfer equivalent to the remittance from the first participant. Further, the transfer mediation apparatus 100 may verify the fact that the remitter transmitted the first currency equivalent to the remittance to the first participant through the remittance slip the remitter device 200 transmitted to the transfer mediation apparatus 100, and verify the fact that the second participant transmitted the second currency equivalent to the remittance to the remittee through the remittance slip the second participant device 320 transmitted to the transfer mediation apparatus 100.Verification content of the completed transaction may be stored in an evaluation for previously made transactions of the participants.

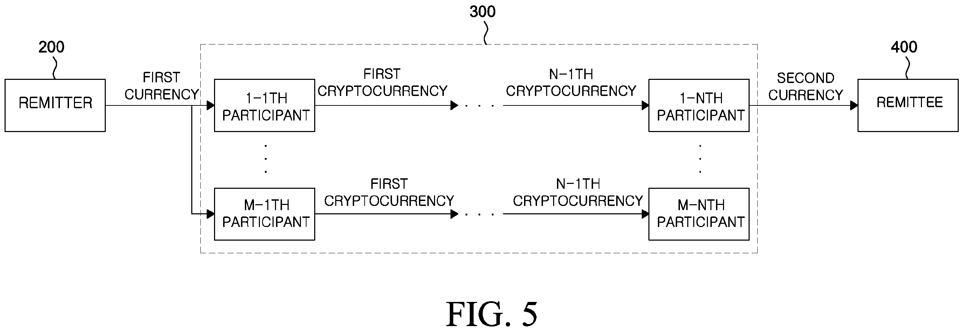

In a case where the transfer mediation apparatus 100 verified the verification content of the completed transaction before receiving a transaction preparation response, the transfer mediation apparatus 100 may transmit a transaction instruction to at least any one of the first participant device 310 and the second participant device 320.In this case, the first transaction instruction may be transmitted to verify whether the first participant transmitted the cryptocurrency to be used for transfer equivalent to the remittance to the second participant, and the second transaction instruction may be transmitted to verify whether the remitter transmitted the first currency equivalent to the remittance to the first participant. Accordingly, the transfer of the second currency equivalent to the remittance from the second participant to the remittee and the transmission of the cryptocurrency equivalent to the remittance from the first participant to the second participant may be more quickly induced. When the transfer of the second currency equivalent to the remittance from the second participant to the remittee, the transmission of the cryptocurrency to be used for transfer equivalent to the remittance from the first participant to the second participant, and the transfer of the first currency equivalent to the remittance from the remitter to the first participant are all made, the transfer mediation by the transfer mediation apparatus 100 is completed. FIG. 5 is a schematic flowchart for explaining a method for transfer mediation according to another exemplary embodiment of the present disclosure. In a method for transfer mediation of FIG. 5, the number of cryptocurrencies to be used for transfer is plural (n-1), and three or more of plural participant devices 300 may participate in the transfer in each of a plurality of cryptocurrencies to be used for transfer. By using the plurality of cryptocurrencies for transfer, it may be induced for the remitter to make a transaction request so that the transfer may be mediated by determining the matching information using two types or more of cryptocurrencies or securing a more favorable exchange rate, even in a case that the number of types of cryptocurrency to be used for transfer is one so that the transfer is hard to be made or in a case that remittance received in a second currency by the remittee is unfavorable in an exchange rate associated with cryptocurrency so that the remittance is low enough not to make a transaction request by the remitter. Further, in a cryptocurrency to be used for transfer, in a case where an amount of the cryptocurrency held by one participant is insufficient, remittance may be divided so that other participants may participate in the transfer using a cryptocurrency by a participatable amount, therefore deficient quantity for the one participant is replaced and the transfer may be mediated. Further, when the remittance is divided to mediate the transfer, a transaction risk is divided as the remittance is divided, therefore a higher transaction stability may be secured. The participatable amount may be determined, by the transfer mediation apparatus 100, based on at least one or more of types and an amount of the cryptocurrency held by the participants, a past transaction history of the cryptocurrency, and an evaluation for previously made transactions of the participants.

Hereinabove, the exemplary embodiments of the present disclosure are described more in detail with reference to the accompanying drawings, the present disclosure is not limited thereto, and may be variously modified without departing from the technical spirit of the present disclosure. Accordingly, the exemplary embodiments disclosed in the present disclosure is for illustrative and is not for limit the technical idea of the present disclosure, the technical scope of the present disclosure is not limited by such an exemplary embodiment. Therefore, the exemplary embodiments described above are examples in all respects and should be understood to be nonlimiting. The scope of the present disclosure is given in the appended claims. All spirits within the equivalent scope will be construed as being included in the present disclosure.

Hereinabove, the exemplary embodiments of the present disclosure are described more in detail with reference to the accompanying drawings, the present disclosure is not limited thereto, and may be variously modified without departing from the technical spirit of the present disclosure. Accordingly, the exemplary embodiments disclosed in the present disclosure is for illustrative and is not for limit the technical idea of the present disclosure, the technical scope of the present disclosure is not limited by such an exemplary embodiment. Therefore, the exemplary embodiments described above are examples in all respects and should be understood to be nonlimiting. The scope of the present disclosure is given in the appended claims. All spirits within the equivalent scope will be construed as being included in the present disclosure.

## Claims

1. A method for transfer mediation, the method comprising:
receiving a transfer request to a remittee account from a remitter device;
determining a matching information including a transaction information associated with a cryptocurrency to be used for transfer among a remitter, at least two or more participants, and a remittee based on the received transfer request; and
transmitting the determined matching information to the remitter device and at least two or more participant devices,
wherein the participant devices include a first participant device and a second participant device,
wherein a transaction between the remitter and the first participant is made with a first currency,
wherein a transaction between the second participant and the remittee is made with a second currency that is different from the first currency, and
wherein a transaction between the first participant and the second participant is made with the cryptocurrency to be used for transfer.

2. The method according to claim 1, wherein
the transaction information associated with the cryptocurrency to be used for transfer comprises a type of the cryptocurrency to be used for transfer and an exchange rate between the cryptocurrency to be used for transfer and the first currency and the second currency, and
determining the matching information determines the at least two or more participant devices, the type of the cryptocurrency to be used for transfer, and the exchange rate based on the transaction information associated with the cryptocurrency.

3. The method according to claim 2, further comprising:
transmitting a first transaction instruction to the second participant device, to instruct the second participant device to exchange the cryptocurrency to be used for transfer into the second currency, based on the matching information, and
transmitting a second transaction instruction to the first participant device, to instruct the first participant device to exchange the first currency into the cryptocurrency to be used for transfer.

4. The method according to claim 3, further comprising:
transmitting the first transaction instruction to the second participant device, in a case where a first transaction preparation response is received from the first participant device within a predetermined time, the first transaction preparation response of which the first participant device will transfer remittance in the cryptocurrency to be used for transfer to the second participant device; and
transmitting the second transaction instruction to the first participant device, in a case where a second transaction preparation response is received from the remitter device within a predetermined time, the second transaction preparation response of which the remitter will transfer remittance in the first currency to the first participant device.

5. The method according to claim 4, wherein the second transaction instruction is not transmitted in a case where the first transaction preparation response is not transmitted from the first participant device.

6. The method according to claim 4, wherein
the first transaction instruction is transmitted to the second participant device to verify whether the first participant device transmitted the first transaction preparation response, and
the second transaction instruction is transmitted to the first participant device to verify whether the remitter device transmitted the second transaction preparation response.

7. The method according to claim 2, wherein
the exchange rate is determined after the cryptocurrency to be used for transfer and the at least two or more participant devices are determined.

8. The method according to claim 2, wherein the cryptocurrency transaction information includes at least one of transaction data between at least one of the first currency and the second currency and the cryptocurrency obtained from an application programming interface(API) of a cryptocurrency exchange and transaction data of using the cryptocurrency on a blockchain-based payment platform.

9. The method according to claim 2, wherein the determining the matching information determines the matching information by a preferential consideration of cryptocurrency transaction information associated with the second currency.

10. The method according to claim 2, wherein
the determining the matching information determines the matching information by a preferential consideration of the pre-registered transaction intention of the participants,
the first participant device is determined as a device of a participant who has the pre-registered transaction intention associated with the first currency and holds the cryptocurrency, and
the second participant device is determined as a device of a participant who has the pre-registered transaction intention associated with the second currency and holds the cryptocurrency

11. The method according to claim 2, wherein
the number of types of the cryptocurrency to be used for transfer is determined by two or more and the number of the participant devices is determined by three or more, and
at least one of the first transaction instruction and the second transaction instruction is a cryptocurrency exchange instruction for making transfer by dividing the remittance by participatable amounts of the participants.

12. The method according to claim 2, wherein the amount of the remittance in the first currency to be used for transfer is determined for at least two or more participants, the amount of the remittance is divided by participatable amounts of the at least two or more participants.

13. The method according to claim 12, wherein the participatable amount is determined based on at least one of types and an amount of the cryptocurrency held by the participants, a past transaction history of the cryptocurrency, and an evaluation for previously made transactions of the participants.

14. The method according to claim 3, further comprising verifying completion of the transaction among the remitter, the first participant, the second participant, and the remittee.

15. The method according to claim 14, wherein the verifying completion of the transaction is performed by using at least one of an electronic wallet address and a remittance slip.

16. The method according to claim 15, wherein
a transmission of the cryptocurrency to be used for transfer between the first participant and the second participant is verified by using an electronic wallet address of the first participant or the second participant, and
a transfer of the second currency from the second participant to the remitter is verified by using a remittance slip received from the second participant and transfer of the first currency from the remitter to the first participant is verified by using a remittance slip received from the remitter.

17. The method according to claim 14, wherein
the first transaction instruction is transmitted to the second participant device to verify whether the first participant transmitted the cryptocurrency to be used for transfer to the second participant, and
the second transaction instruction is transmitted to the first participant device to verify whether the remitter transmitted the first currency to the first participant.

18. The method according to claim 14, wherein a verification content of completed transaction between the remitter, the first participant, the second participant, and the remittee is stored in an evaluation for transactions of the participants.

19. A transfer mediation apparatus comprising:
a communication unit configured to communicate with a physically separated device, and
a processor configured to be connected to the communication unit,
wherein the processor is configured to:
receive a transfer request to a remittee account from a remitter device,
determine a matching information including a transaction information associated with a cryptocurrency to be used for transfer among a remitter, at least two or more participants, and a remittee based on the received transfer request, and
transmit the determined matching information to the remitter device and at least two or more participant devices,
wherein the participants include a first participant and a second participant,
wherein the participant devices include a first participant device of the first participant and a second participant device of the second participant,
wherein a transaction between the remitter and the first participant is made with a first currency and,
wherein a transaction between the second participant and the remittee is made with a second currency that is different from the first currency,
wherein a transaction between the first participant and the second participant is made with the cryptocurrency to be used for transfer,
wherein the transaction information associated with the cryptocurrency to be used for transfer comprises a type of the cryptocurrency to be used for transfer and an exchange rate between the cryptocurrency to be used for transfer and the first currency and the second currency, and
wherein the matching information determines the at least two or more participant devices, the type of the cryptocurrency to be used for transfer, and the exchange rate based on the transaction information associated with the cryptocurrency.
